# EUROPEAN PATENT SPECIFICATION

(11) **EP 3 885 918 B1**
(45) Date of publication and mention of the grant of the patent: **23.08.2023**
(21) Application number: 20207683.2
(22) Date of filing: 16.11.2020
(51) Int. Cl.: G06F 12/0831, G06F 12/0813, G06F 12/0811, G06F 9/30

(54) **SYSTEM, APPARATUS AND METHOD FOR PERFORMING A REMOTE ATOMIC OPERATION VIA AN INTERFACE**
SYSTEM, VORRICHTUNG UND VERFAHREN ZUR DURCHFÜHRUNG EINES ENTFERNTEN ATOMBETRIEBS ÜBER EINE SCHNITTSTELLE
SYSTÈME, APPAREIL ET PROCÉDÉ POUR LA RÉALISATION D'UNE OPÉRATION ATOMIQUE À DISTANCE PAR L'INTERMÉDIAIRE D'UNE INTERFACE

(30) Priority: 26.03.2020 US 202016830468
(43) Date of publication of application: 29.09.2021
(73) Proprietor: INTEL Corporation, Santa Clara, CA 95054 (US)
(72) Inventor: Svennebring, Jonas, 19143 Sollentuna (SE); Jayasimha, Doddaballapur, Saratoga, CA 95070 (US); Choudhary, Swadesh, Mountain View, CA 94041 (US)
(74) Representative: Samson & Partner Patentanwälte mbB

(56) References cited:
- CN-A- 105 094 840
- US-A1- 2011 252 168
- US-A1- 2018 004 687
- US-A1- 2019 243 761

## Description

### Technical Field

Embodiments relate to remote atomic operations in a processor-based system.

### Background

An atomic memory operation is one during which a processor core can read a location, modify it, and write it back in what appears to other cores as a single operation. An atomic memory operation in a multi-core system is one that cannot be divided into any smaller parts, or appears to other cores in the system to be a single operation. Read-modify-write is one of a class of atomic memory operations that both reads a memory location and writes a new value into it as part of the same operation, at least as it appears to other cores in the multi-core system. Atomic operations are prevalent in a diverse set of applications, including packet processing, high-performance computing, and machine learning, among others.

One or more central processing unit (CPU) cores can exist within a processor, which can occupy one of multiple sockets in a multi-socket system. Execution of atomic operations can suffer inefficiencies, especially with contention for a same memory address among multiple sockets in a multi-socket system.

US 2019/0243761 A1 relates to remote atomic operations (RAO) in multi-socket systems

### Brief Description of the Drawings

FIG. 1 is a block diagram of a system to perform remote atomic operations in accordance with an embodiment.
FIG. 2 is a block diagram of a multi-socket system to execute a remote atomic operation in accordance with an embodiment.
FIG. 3 is a flow diagram of a method in accordance with an embodiment.
FIG. 4 is a flow diagram of a method in accordance with another embodiment.
FIG. 5 is a transaction flow diagram illustrating operations for an example remote atomic operation flow in accordance with an embodiment.
FIG. 6 is a transaction flow diagram illustrating operations for an example remote atomic operation flow in accordance with another embodiment.
FIG. 7 is a transaction flow diagram illustrating operations for an example remote atomic operation flow in accordance with still another embodiment.
FIG. 8 is a transaction flow diagram illustrating operations for an example remote atomic operation flow in accordance with yet another embodiment.
FIG. 9 is a transaction flow diagram illustrating operations for an example remote atomic operation flow in accordance with a yet further embodiment.
FIG. 10 is a transaction flow diagram illustrating operations for an example remote atomic operation flow in accordance with a still further embodiment.
FIG. 11 is a block diagram of a system in accordance with another embodiment.

### Detailed Description

The invention is defined by the independent claims.

In various embodiments, remote atomic operations (RAO) can be performed in a wide class of devices. As used herein, a remote atomic operation is an operation that is executed outside a central processing unit (CPU). More specifically herein, such RAO may be executed externally to core circuitry of a processor, for example, at a home agent, a cache controller, a memory controller or other core-external circuitry. In different use cases, a destination agent that executes a RAO may be a remote socket, a coherent or non-coherent device coupled to a processor socket, a remote memory or so forth. In use cases herein, these destination agents may themselves locally perform a remote atomic operation, e.g., in a home agent, accelerator device, or so forth. In this way, the overhead incurred in obtaining a requested cache line and bringing it back to a requesting agent is avoided. Embodiments enable such RAO operations to be sent to external load/store devices such as Peripheral Component Interconnect Express (PCIe) devices and destination agents coupled via cache coherent protocols such as Intel^{®} Ultra Path Interconnect or Compute Express Link (CXL) protocols. In addition, embodiments enable RAO operations to be issued to uncacheable memory and other such devices.

Embodiments described herein allow the latency of atomic memory operations to be reduced (in the contended case, by queuing operations at a single location and performing them in place). These remote atomic operations include a read-modify-write operation on a memory location, atomically. Further, memory accesses performed by RAO instructions can be weakly ordered yet are built on top of a more strongly-ordered memory model. (As used herein, regular memory loads and stores have more strongly-ordered memory semantics, while RAO instructions have weaker memory semantics with respect to other RAOs and regular instructions. Such weak semantics allow more memory interleavings and, hence, better performance.) Embodiments disclosed herein thus allow the latency of atomic operations to be hidden (via weak ordering semantics).

Some RAOs allow for computations to be performed within a memory subsystem. Such operation is in contrast to classic atomics (lock prefix), where data is pulled into the requesting core and hence ping-pongs between cores, which is extremely costly under contention. With RAO, data stays put and operations are instead sent to a destination agent (e.g., a memory subsystem). In addition RAOs that do not have any data return (aka posted-RAO or fire-n-forget) execute with weak ordering semantics. This further reduces cycle cost at a core level and also reduces the number of transactions on an interconnect.

With embodiments, user-level RAO instructions may be provided to devices coupled to a processor over uncached memory such as PCIe or other load/store devices. In different use cases, such devices may be internal to a given processor socket (e.g., on a same silicon die as a multicore processor, within the same package, or in a different package). Still further, embodiments may be used to reduce overhead of RAO transactions by sending such transactions to a destination agent that currently hosts the cache line. In this way, write back/cached memory transactions may be improved. Such destination agents may include, as examples, agents coupled to a source agent via a CXL or Intel^{®} UPI interconnect. Understand that embodiments are applicable to a wide variety of multi-socket architectures that are fully cache coherent.

The various embodiments are not limited in this regard. Different use cases may include any of the following: a source agent is a core within a CPU of a SoC, and a target agent is an SoC internal device; a source agent is a core within a CPU of a SoC, and a target agent is an external device; a source agent is a core within a CPU of a SoC, and a target agent is an external CPU; a source agent is an SoC internal device, and a target agent is within a CPU of the SoC; a source agent is an external device, and a target agent is within a CPU of the SoC; a source agent is an external device, and a target agent is another external device; a source agent is an SoC internal device, and a target agent is another SoC internal device; or a source agent is an SoC internal device, and a target agent is an external device. Of course other use cases are possible.

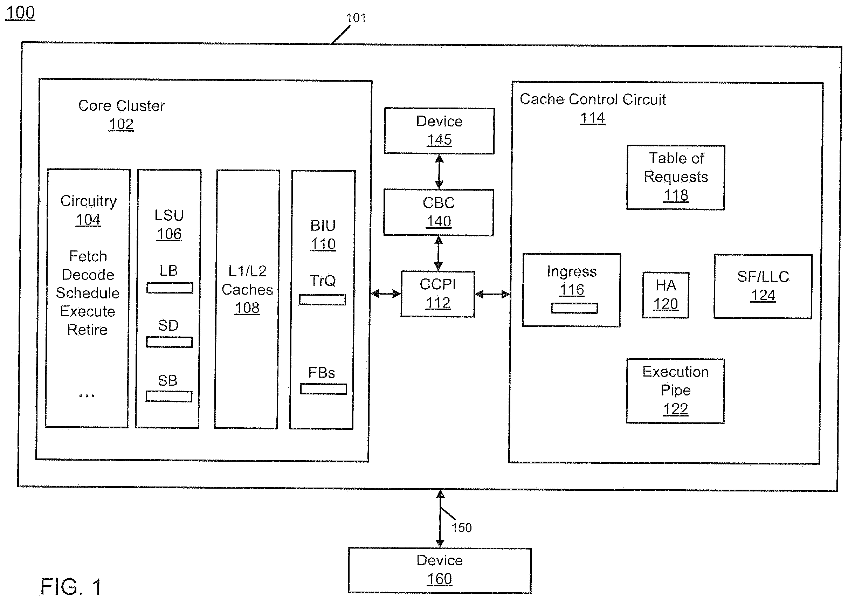

Referring now to FIG. 1, shown is a block diagram of a system including a multi-core processor to perform remote atomic operations in accordance with an embodiment. As shown, a system 100 includes a multicore processor 101 having a core cluster 102, a cache coherent protocol interface (CCPI) 112, and a cache control circuit 114. CCPI 112 couples core cluster 102 to cache control circuit 114. Also shown are snoop filter/last level cache (SF/LLC) 124, which are to be used by cache control circuit 114 in order to service RAO transactions. In some embodiments, cache control circuit 114 is referred to as a caching and home agent (CHA).

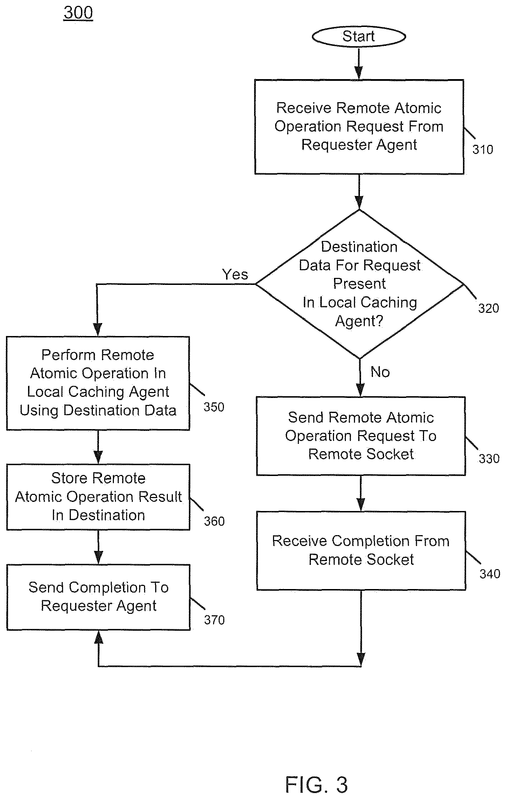

Core cluster 102, according to the embodiment of FIG. 1, includes circuitry 104, which includes at least parts of a processor pipeline to be used in executing instructions for remote atomic operations, according to some embodiments. Circuitry 104 can be used, for example, to implement the processes illustrated in any of FIGS. 3-10. Namely, circuitry 104 includes a fetch stage to fetch an instruction from a code storage, a decode stage to decode the instruction, a schedule stage to schedule execution, an execute stage to perform an operation specified by the instruction, and a retire stage to retire the instruction.

In some embodiments, core cluster 102 includes a load/store unit (LSU) 106. As shown, LSU 106 includes buffers including a load buffer (LB), a store data buffer (SD), and a store buffer (SB) to hold data transfers between circuitry 104 and L1/L2 caches 108. In some embodiments, each of the entries of the LB, SD, and SB buffers is 64 bytes wide.

As shown, core cluster 102 includes L1/L2 caches 108. A cache hierarchy in core cluster 102 contains a first level instruction cache (L1 ICache), a first level data cache (L1 DCache) and a second level (L2) cache. When circuitry 104 implements multiple logical processors, they share the L1 DCache. The L2 cache is shared by instructions and data. In some embodiments, the L1 and L2 data caches are non-blocking, so can handle multiple simultaneous cache misses.

As shown, core cluster 102 includes a bus interface unit (BIU) 110, which, in operation, handles transfer of data and addresses by sending out addresses, fetching instructions from a code storage, reading data from ports and memory, and writing data to ports and memory.

CCPI 112, according to the embodiment of FIG. 1, provides a bidirectional datapath between core cluster 102 and cache control circuit 114. Cache control circuit 114, as shown, includes an ingress 116, a table of requests 118, a SF/LLC 124, an execution pipe 122, and a home agent 120. Ingress 116 communicates with and buffers transaction to and from CCPI 112. Table of requests 118, in some embodiments, includes registers or static random access memory to maintain memory requests and their progression. SF/LLC 124 in some embodiments includes a snoop filter to respond to snoop requests from other core clusters, as well as a last level cache that is inclusive of the contents of lower level caches in core cluster 102, which may be used to perform RAO transactions. In other words, in some embodiments, any cache line that is valid in the L1/L2 caches 108 is also present in the last level cache. Note that embodiments may be used in connection with inclusive and non-inclusive cache architectures. Execution pipe 122 in some embodiments enhances read-modify-write functionality by providing additional integer arithmetic with reduced latency. In some embodiments, for example, table of requests 118 maintains a destination address and an immediate (constant value) to be added to the value, the sum then to be written back to the destination address.

As further shown in FIG. 1, processor 101 also may include a device 145. As shown, device 145 may couple to CCPI 112 via a coherency bridge circuit 140, which acts as an interface between non-coherent devices such as device 145 and coherent portions of processor 101. In embodiments herein, device 145 itself may act as a source or destination agent with respect to RAO transactions as described herein. As such, device 145 may include at least one execution circuit, such as a micro-arithmetic logic unit (ALU) to perform RAO transactions, e.g., using destination data local to it.

As further illustrated, a device 160 couples to multicore processor 101 via an interconnect 150. In different embodiments, device 160 may be a non-coherent device such as a PCIe or other load/store device (and in such case, interconnect 150 may be a non-coherent interconnect). In other embodiments, device 160 may be a coherent device such as another processor or another coherent device (in which case, interconnect 150 may be a coherent interconnect). As non-limiting examples, device 160 may be an accelerator, a network interface circuit (NIC), storage or any other type of device that may couple to a processor socket, e.g., by way of an input/output interface. In any event, device 160 may include an execution circuit such as a micro-ALU to perform RAO operations as described herein.

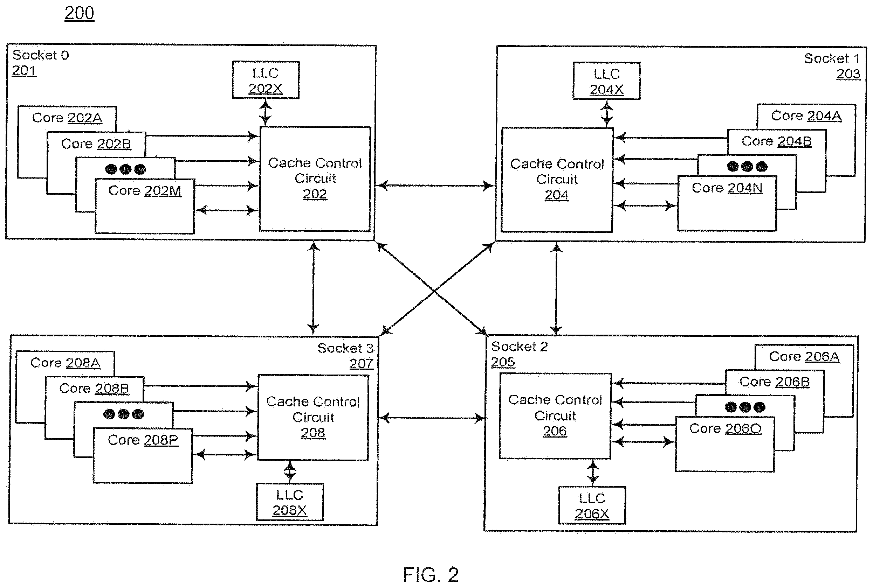

Referring now to FIG. 2, shown is a block diagram of a multi-socket system to execute remote atomic operations in accordance with an embodiment. As shown, multi-socket system 200 includes socket 0 201, which includes cores 202A-M, last-level cache (LLC) 202X, and cache control circuit 202; socket 1 203, which includes cores 204A-N, LLC 204X, and cache control circuit 204; socket 2 205, which includes cores 206A-O, LLC 206X, and cache control circuit 206; and socket 3 207, which includes cores 208A-P, LLC 208X, and cache control circuit 208. Understand that embodiments may be used with more sophisticated cache hierarchy architectures, such as including a level 4 cache, additional memory side caches, snoop filters and so forth. In addition, embodiments may be used in systems having higher socket counts and systems implementing node-controller based topologies, among others. RAO transactions traverse from one socket to another using one or more hops via one or more links of the interconnect of the multi-socket architecture.

Note that cache control circuits 202, 204, 206, and 208 are logical representations of cache control circuitry, such as a CHA that includes several physical components. Similarly, LLCs 202X, 204X, 206X, and 208X are logical representations of last level cache circuitry that have multiple components and circuitry, potentially divided into partitions.

As illustrated, sockets 0-3 are connected in a cross-bar configuration, allowing direct connections among cache control circuits 202, 204, 206, and 208 in accordance with some embodiments. In some embodiments, the cache control circuit in each of the sockets 0-3 conducts discovery to learn the topology of the system. Understand that embodiments may be used in other interconnect topologies such as rings, meshes and so forth.

In some embodiments, sockets 0-3 are each disposed on a printed circuit board, the sockets being connected in a cross-bar configuration. In some embodiments, two or more processors operating in accordance with embodiments disclosed herein are plugged into the sockets. A multi-socket system as illustrated in FIG. 2 is sometimes referred to as a multi-processor system. A multi-socket system including two sockets is sometimes referred to as a dual-socket system.

In various embodiments, a source device implemented as a coherent agent such as a core or coherent device (e.g., a caching agent) may issue an RAO transaction to a destination device. With embodiments herein, instead of fetching a destination data operand of the RAO transaction to the source agent (e.g., last level cache), the RAO transaction, including an opcode and partial data for use in the transaction, is carried to the location of the destination data. In different use cases this destination location may be a local socket LLC, a remote socket home agent or memory, or an external device cache. Thereafter, an execution circuit of the destination agent may perform the RAO transaction and update the destination data element, avoiding the need for additional communications between source and destination. In different use cases intermediate communication protocols including intra-die interconnect protocols, Intel^{®} UPI, PCIe and CXL protocols may support flows as described herein.

Understand that in different embodiments a variety of different RAO operations may be performed. As examples, RAO operations may include operations in which memory is updated such as by way of an add operation or a result of a logical operation (such as an AND, OR or XOR operation). As additional examples, RAO operations may include compare and exchange operations, including such operations that provide for add, increment or decrement operations. As still further examples, RAO operations may include ADD operations where a destination data is updated with a data payload of an RAO transaction. Similarly, data payloads may be used for atomic logical operations (e.g., AND, OR or XOR operations). Other RAO transactions may avoid data payloads, such as atomic increment or decrement operations.

Referring now to FIG. 3, shown is a flow diagram of a method in accordance with an embodiment. As shown in FIG. 3, method 300 is a method for performing a remote atomic operation in accordance with an embodiment. Method 300 shown in FIG. 3 is from the point of view of a global cache control circuit such as a caching agent; however understand that the various operations performed in FIG. 3 may be performed by other components and additional intervening operations may optionally occur. As such, method 300 may be performed by hardware circuitry, firmware, software, and/or combinations thereof.

As illustrated, method 300 begins by receiving a RAO request from a requester agent (block 310). As one example, a cache controller of a local processor socket may receive an RAO request from a core or other device of the processor socket. Understand that this request may, in some cases, include at least a portion of the data to be operated on in the RAO, such as according to a data push model. In other cases, the cache controller may request at least a portion of the data to be operated on using a data pull model.

In any event, next at diamond 320 it is determined whether destination data for the request is present in the local caching agent, such as a cache memory associated with the cache controller. If not, control passes to block 330 where the RAO request (and at least a portion of the data associated with the request) is sent to a remote socket (block 330). Understand that this remote socket may be another processor socket to which the first processor socket is coupled by way of a coherent interconnect. In other cases, this remote socket may be a non-coherent agent, such as a load/store device.

Understand that this remote device, socket or other remote agent performs the RAO using a received data along with destination data such as located in a memory location local to the remote device. After the RAO is performed, this memory location is in turn updated with the RAO result.

Also as part of performing the RAO operation, the remote device may send a completion back to the cache controller. Thus as illustrated in FIG. 3, at block 340 the cache controller may receive a completion from the remote agent. Understand that this completion may include the updated data, in cases where the RAO request is a non-posted request. Instead for a posted request, the completion may simply indicate successful completion of the RAO operation in the remote device. Next control passes to block 370 where this completion is sent to the requester agent, which may consume the data in the case of a non-posted RAO request and take other appropriate action, such as clearing an entry of an order buffer associated with this request based on this completion.

Still with reference to FIG. 3 if instead at diamond 320 it is determined that the destination data for the request is present in the local caching agent (e.g., present in a cache coupled to this cache controller), control passes to block 350 where the RAO operation is performed in the local caching agent using this destination data and other data associated with the request. At block 360 the RAO result may be stored in the destination. Finally, control passes to block 370 where a completion is sent to the requester agent, as discussed above. Although shown at this high level in the embodiment of FIG. 3, many variations and alternatives are possible.

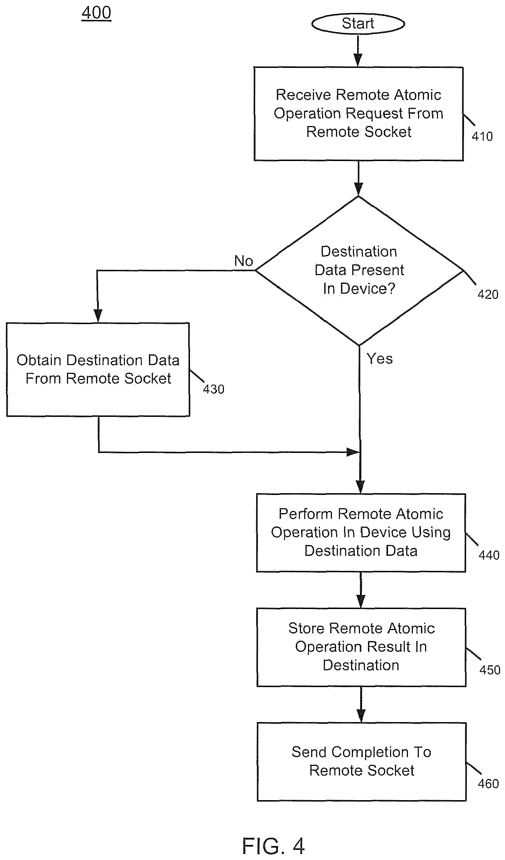

Referring now to FIG. 4, shown is a flow diagram of a method in accordance with another embodiment. As shown in FIG. 4, method 400 is a method for performing a remote atomic operation in a device that currently hosts a given destination data, e.g., by way of a cache line; however understand that the various operations of FIG. 4 may be performed by other components and additional intervening operations may optionally occur. As such, method 400 may be performed by hardware circuitry, firmware, software, and/or combinations thereof.

As illustrated, method 400 begins by receiving a RAO request from a remote socket in a target agent (block 410). In different cases, this target agent may be a coherent device or a non-coherent device. In any case control passes to diamond 420 where it is determined whether destination data is present in the device. If not, control passes to block 430 where the destination data may be obtained from a remote socket. Control passes next to block 440 where the RAO is executed in the device itself. Then the RAO result is stored in the destination location (block 450). Finally, at block 460 a completion may be sent to the remote socket that requested performance of the RAO transaction. Note that depending upon implementation and request type, this completion may include data (e.g., in the case of a non-posted RAO request) or not include data (e.g., for a posted RAO request). Understand while shown at this high level in FIG. 4, many variations and alternatives are possible.

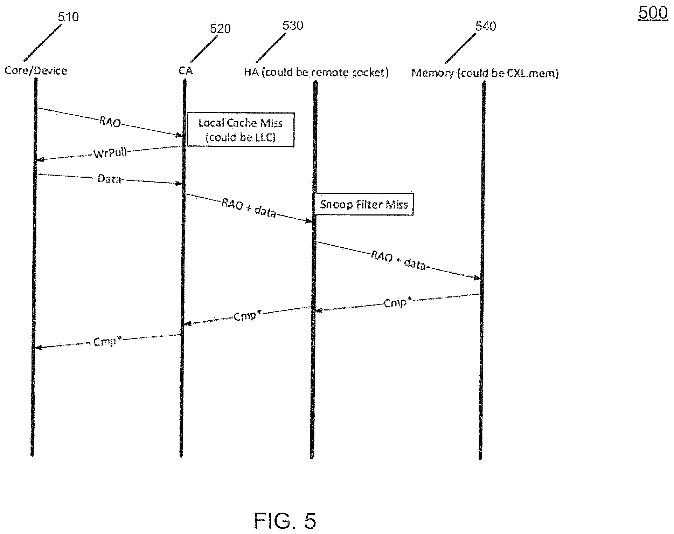

Referring now to FIG. 5, shown is a transaction flow diagram illustrating operations for an example remote atomic operation flow in accordance with an embodiment. As shown in FIG. 5, transaction flow diagram 500 shows operations occurring between multiple devices including a requester agent 510, shown in FIG. 5 as a core/device (generically core), a caching agent 520 such as a cache controller, a home agent 530 that is owner of the destination memory location, and a memory 540 that is the ultimate destination of the RAO transaction. Note that in some instances home agent 530 may be included in a processor socket that is remote from another processor socket having core 510 and caching agent 520.

As illustrated, transaction flow diagram 500 begins with core 510 issuing a RAO request to caching agent 520. Assume that this request is for a destination address that misses in a local cache such as a LLC. In this implementation example, cache agent 520 may in turn issue a write pull to core/device 510 to obtain the data that is to be used as an operand in the RAOAs seen, when provided with the data, caching agent 520 sends the RAO request with this data to home agent 530. As discussed above, embodiments may be used in data push and data pull models. As such, in other cases core 510 may issue the RAO request with the data. Home agent 530 may access a snoop filter to determine whether a destination address of the RAO request hits. In this example, assume that there is not a hit. As such, caching agent 530 sends the RAO request and data to memory 540, which may execute the RAO locally (e.g., within an execution unit present in its memory subsystem).

As a result of this local execution of the RAO, improved efficiency is realized. Understand that the RAO result may be stored directly in the destination address in memory 540. In addition, as further illustrated in FIG. 5, a completion is sent back to requester core/device 510 (via home agent 530 and caching agent 520). Depending upon the type of RAO, such completion may carry data, e.g., for a non-posted RAO. Understand while shown at this high level in the embodiment of FIG. 5, many variations and alternatives are possible. For example, while the embodiment of FIG. 5 shows home agent and caching agent as examples, other systems may implement similar functionality in coherent and non-coherent fabrics and switches. In such cases a flow such as shown in FIG. 5 may not necessarily come through caching agent or home agent.

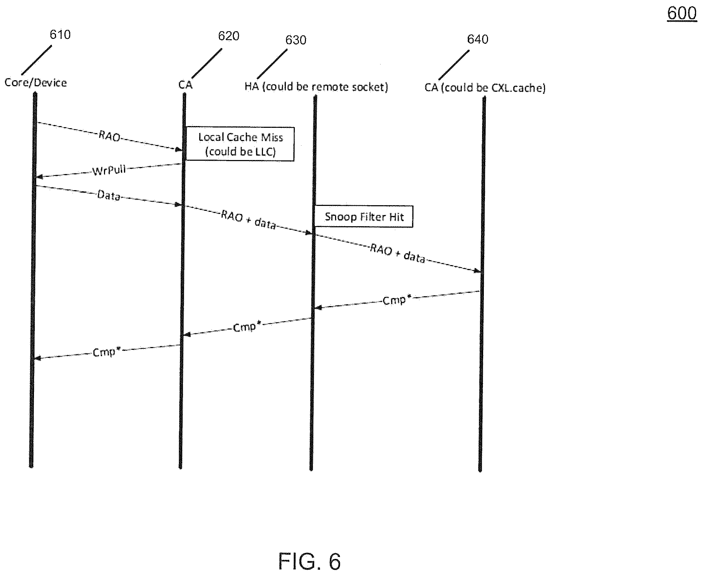

Referring now to FIG. 6, shown is a transaction flow diagram illustrating operations for an example remote atomic operation flow in accordance with another embodiment. As shown in FIG. 6, transaction flow diagram 600 shows operations occurring between multiple devices including a requester agent 610, shown in FIG. 6 as a core/device (generically core), a caching agent 620 such as a cache controller, a home agent 630 that is owner of the destination memory location, and a caching agent 640 associated with a cache memory that stores destination data of the RAO transaction. Note that in some instances home agent 630 and caching agent 640 may be included in a processor socket that is remote from another processor socket having core 610 and caching agent 620.

As illustrated, transaction flow diagram 600 begins with core 610 issuing a RAO request to caching agent 620. Assume that this request is for a destination address that misses in a local cache. In this implementation example, caching agent 620 may in turn issue a write pull to core/device 610 to obtain the data that is to be used as an operand in the RAO. Caching agent 620 sends the RAO with this data to home agent 630. Since a destination address of the RAO request hits in a snoop filter of home agent 630, the RAO request and data are sent directly to caching agent 640, which may execute the RAO locally (e.g., within an execution unit present in its memory subsystem). As a result of this local execution of the RAO, improved efficiency is realized (with the RAO result stored directly in caching agent 640). Note that this RAO result remains in the caching agent and is not written back to memory until eviction occurs. In addition, as further illustrated in FIG. 6, a completion is sent back to requester core/device 610 (via home agent 630 and caching agent 620). As discussed above, depending upon the type of RAO such completion may carry data. Understand while shown at this high level in the embodiment of FIG. 6, many variations and alternatives are possible.

In embodiments, load/store agents also may issue RAO transactions to destination agents (including coherent agents). In such use cases, a coherency bridge circuit that couples the non-coherent load/store device and coherent agent (e.g., a remote processor socket) may be used to convert load/store semantics to coherent processing flows. With such use cases, this coherency bridge circuit may convert or translate load/store-sourced RAO transactions to coherent RAO transactions to be executed by the remote coherent agent.

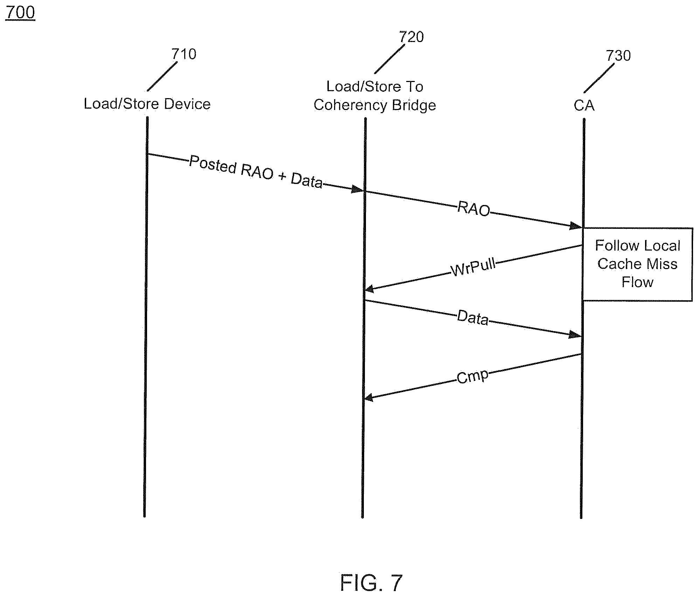

Referring now to FIG. 7, shown is a transaction flow diagram illustrating operations for an example remote atomic operation flow in accordance with still another embodiment. As shown in FIG. 7, transaction flow diagram 700 shows operations occurring between multiple devices in which a requester agent 710 is a load/store device that couples to a caching agent 730 via a coherency bridge circuit 720. Although embodiments are not limited in this regard, coherency bridge circuit 720 may be implemented as an interface to provide interconnection between coherent and non-coherent agents. In a particular embodiment, coherency bridge circuit 720 may be an internal interface such as an Intel^{®} On Chip Scalable Fabric (IOSF) interface or other scalable interface of an SoC or other integrated circuit. Understand a system having this topology may include further components, such as memory, home agents and so forth.

As illustrated, transaction flow diagram 700 begins with requester agent 710 issuing a RAO request to coherency bridge circuit 720. This request is a posted request and it includes data to be used in the RAO operation, e.g., according to a data push model. In turn, coherency bridge circuit 720 sends the RAO request to caching agent 730. According to a data pull model as illustrated in FIG. 7, caching agent 730 may issue a write pull request to obtain the data from coherency bridge circuit 730. Note that such operation, on a local cache miss, may follow flows such as discussed above in FIGs. 5 and 6. Upon receipt of the data, caching agent 730 may cause the RAO operation to be performed (e.g., locally or by a memory) and store the RAO result at the destination address. Further as shown, caching agent 730 sends a completion back to coherency bridge circuit 720. Note that because this RAO transaction is a posted transaction, there is no completion sent back to load/store device 710, and the completion from caching agent 730 to coherency bridge 720 does not include data.

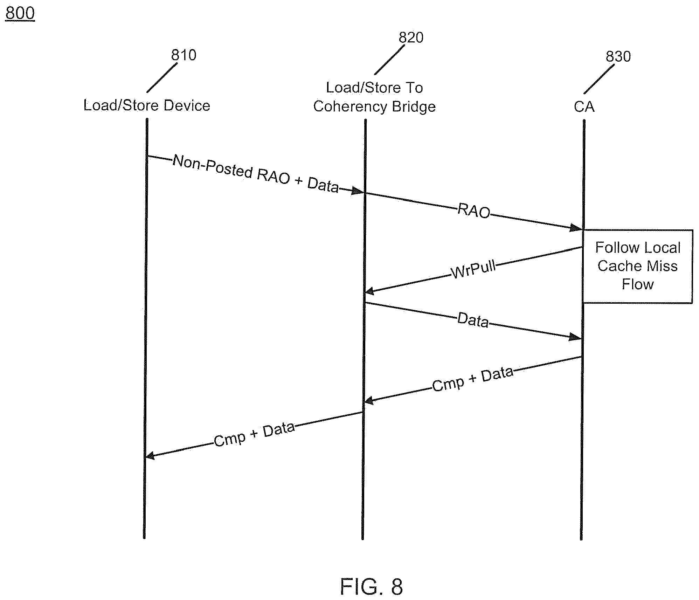

Referring now to FIG. 8, shown is a transaction flow diagram illustrating operations for an example remote atomic operation flow in accordance with yet another embodiment. As shown in FIG. 8, transaction flow diagram 800 shows operations occurring between multiple devices in which a requester agent 810 is a load/store device that couples to a caching agent 830 via a coherency bridge circuit 820. The general operation is the same here as in FIG. 7. However here the RAO request is a non-posted RAO request. As such the completion originating in caching agent 830 includes the RAO result, and the completion with data is returned to requester agent 810.

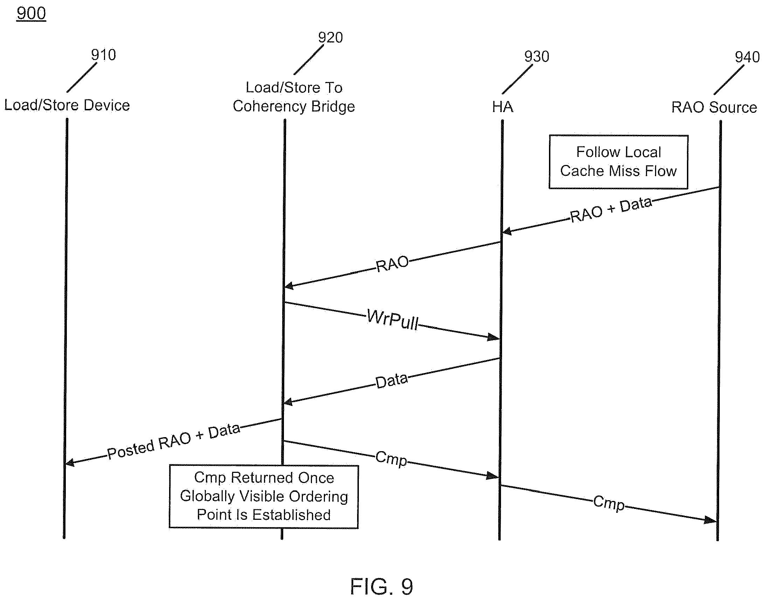

It is also possible in embodiments to have a load/store device be a destination for (and thus execute) a RAO operation. Referring now to FIG. 9, shown is a transaction flow diagram illustrating operations for an example remote atomic operation flow in accordance with a yet further embodiment. As shown in FIG. 9, transaction flow diagram 900 shows operations occurring between multiple devices in which a source agent 940 (which may be a coherent agent) couples to a home agent 930, which in turn couples to a load/store device 910 via a coherency bridge circuit 920. Note here load/store device 910 itself may perform the RAO operation in response to receipt of the posted RAO request and data. And as shown, coherency bridge circuit 920 issues a completion (without data) back to source agent 910 once a globally visible ordering point is established for the posted RAO transaction.

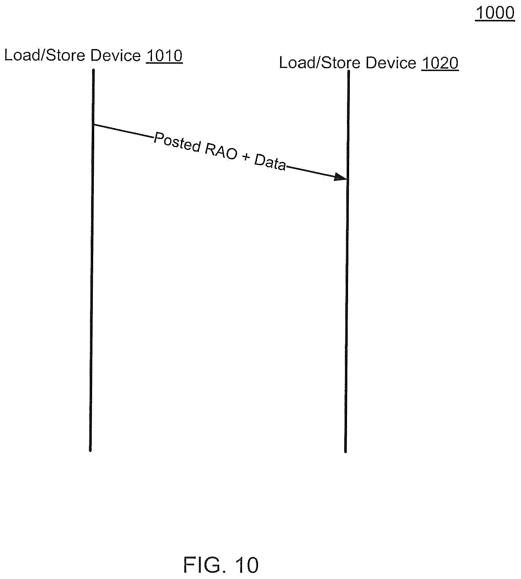

It is further possible for multiple non-coherent devices, e.g., two load/store devices, to implement RAO transactions. Referring now to FIG. 10, shown is a transaction flow diagram illustrating operations for an example remote atomic operation flow in accordance with a still further embodiment. As shown in FIG. 10, transaction flow diagram 1000 shows operations occurring between multiple load/store devices 1010, 1020. In this arrangement, load/store device 1010 sends a posted RAO transaction with data to load/store device 1020. In response to this request, load/store device 1020 may execute the RAO operation and store the RAO result in a destination location. And with load/store devices, there is no completion sent between the devices.

Embodiments can be used in many different use cases. Several example use cases for RAO operations as described herein include counters/statistics for network processing and producer/consumer synchronization applications.

Counters and statistics handling are a common task for many applications and system software. One example use case is a scenario in the networking space, but similar scenarios are also present in many other domains. Statistics handling, although a simple operation, typically accounts for around 10% of an IP stack with application processing. For packet processing the different layers contain a large set of counters, which both count common flows such as number of packets processed, number of bytes processed for different scenarios, and provide for a wide range of error counters. The counters may be updated at a high frequency, sometimes in a bursty nature, and some will be relatively contended whereas others are significantly less frequently touched. Commonly these statistics are handled within one compute unit (e.g., a CPU). But with the introduction of smart network interface circuits (NICs), there is a push to divide processing between CPU and device. Based on different flows the counters can therefore be updated both from the CPU (e.g., slow-path flows) as well as the device (e.g., fast-path flows) but the state is to be made globally visible in an efficient way for fast access. Furthermore, a total counter dataset can be very large when the number of flows is large and hence may not necessarily fit into the memory of the device. RAO in accordance with an embodiment may solve these problems by pushing the updates to one location, e.g., the CPU, and statistics-based decisions can then efficiently be taken there.

Another usage area is for producer/consumer transactions. This is a classic problem arising in a number of applications. As one example, assume a producer writes new data at known locations in memory. A consumer reads this data. The synchronization problem is to ensure that the producer does not overwrite unconsumed data and the consumer does not read old data. Classical solutions result in several overheads either because of the need to avoid "races" or because of scalability issues. Embodiments may provide a solution to a multiple-producer multiple-consumer synchronization problem.

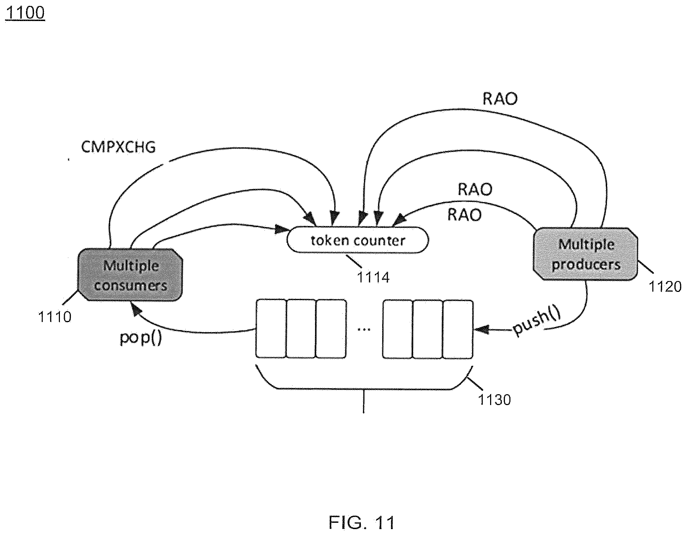

Referring now to FIG. 11, shown is a block diagram of a system in accordance with another embodiment. As shown in FIG. 11, system 1100 is a multi-socket system including a variety of cores and other agents. These cores and agents may form some or all of a plurality of producers 1110 and a plurality of consumers 1120. As shown in FIG. 11, producers 1110 and consumers 1120 communicate via a queue 1130 onto which producers 1110 push data. In turn, consumers 1120 pop data elements from queue 1130. As further shown, interaction between producers and consumers also is by way of a token counter 1140. With embodiments herein, as a producer 1110 pushes data into queue 1130 it may issue a corresponding RAO transaction to token counter 1140. As a consumer 1120 pops a respective data element from queue 1130, it may issue a compare exchange (CMPXCHG) operation to token counter 1140 to determine whether to consume the popped data.

Assume token counter 1140 and queue pointers have been initialized. A producer 1110 pushes data, and once data is globally observed, it sends a posted RAO (e.g., an atomic increment). Ensuring global observations depends on the producer type, and may include load/store (PCIe) agents relying on posted ordering to flush data before RAO; CXL.cache has semantics to know global observability; and CPU producers may execute a store fence before the RAO. In turn, a consumer 1120 may poll on token counter 1140 with a CMPXCHG instruction (note polling overheads can be reduced with "snap shot read" instructions). If token counter 1140 is not zero, it performs the CMPXCHG instruction. If the CMPXCHG is successful, consumer 1120 may consume the data, or otherwise it does not.

For example, a processor includes at least one core and a cache control circuit coupled to the at least one core. The cache control circuit is to: receive a RAO request from a requester; send the RAO request and data associated with the RAO request to a destination device, where the destination device is to execute the RAO using the data and destination data obtained by the destination device and store a result of the RAO to a destination location; and receive a completion for the RAO from the destination device.

For example, the cache control circuit is, in response to the RAO request, to perform a write pull to obtain the data.

For example, the cache control circuit is to perform the write pull in response to a miss for the data in a cache memory associated with the cache control circuit.

For example, when the RAO request comprises a non-posted request, the completion comprises the result.

For example, when the RAO request comprises a posted request, the completion does not include the result.

For example, the destination device comprises a remote device coupled to the processor via a CXL interconnect.

For example, the remote device comprises a home agent to send the RAO request and the data to a memory in response to a snoop filter miss for the destination data in the home agent.

For example, the remote device comprises a home agent to send the RAO request and the data to a caching agent in response to a snoop filter hit for the destination data in the home agent.

For example, the destination device comprises a remote processor socket coupled to the processor via a cache coherent interconnect.

For example, the at least one core is the requester, and the at least one core is to send the data with the RAO request.

For example, the processor further comprises one or more devices, where a first non-coherent device of the one or more devices comprises the destination device.

For example, the processor further comprises a token counter, where a first core is to send the RAO request to the token counter to cause an increment to the token counter, after writing a first data to a queue, and a first device is to consume the first data based on a value of the token counter.

For example, a method comprises: receiving, in a coherency bridge circuit coupled between a source agent and a destination agent, a RAO request, the coherency bridge circuit to translate coherent transactions to non-coherent transactions and translate non-coherent transactions to coherent transactions; sending, from the coherency bridge circuit, the RAO request to the destination agent to cause the destination agent to execute the RAO using destination data stored in a destination address owned by the destination agent and store a result of the RAO at the destination address; and receiving a completion for the RAO from the destination agent to indicate that the RAO has been completed.

For example, the method further comprises translating a non-coherent request comprising the RAO request to a coherent request comprising the RAO request and sending the coherent request to the destination agent via a caching agent associated with the destination address.

For example, the method further comprises: sending the RAO request to the caching agent; receiving a write pull request from the caching agent; and sending a datum to the caching agent in response to the write pull request, to cause the caching agent to execute the RAO further using the datum.

For example, the method further comprises sending the completion with the result to the source agent, where the RAO request comprises a non-posted RAO request.

For example, the method further comprises: pushing, by the source agent, a first data element to a queue; sending the RAO request to the coherency bridge circuit after the first data element is globally observed, where the destination data comprises a value of a token counter; and consuming, by a consuming circuit, the first data element in response to determining that the destination data comprising the value of the token counter matches a first value.

For example, a computer readable medium including instructions is to perform the method of any of the above examples.

In a further example, a computer readable medium including data is to be used by at least one machine to fabricate at least one integrated circuit to perform the method of any one of the above examples.

F an apparatus comprises means for performing the method of any one of the above examples.

For example, a system comprises a SoC and a remote device coupled to the SoC via at least one interconnect. The SoC may include: at least one core; one or more devices coupled to the at least one core; and a cache control circuit coupled to the at least one core and the one or more devices. The cache control circuit is to: receive a RAO request from a requester; send the RAO request and data associated with the RAO request to the remote device, where the remote device is to execute the RAO using the data and destination data and store a result of the RAO to a destination location; and receive a completion for the RAO. The remote device may comprise an execution circuit to receive the RAO request and the data, obtain the destination data from the destination location, execute at least one operation of the RAO request using the data and the destination data and store the result to the destination location.

For example, the SoC further comprises a coherency bridge circuit coupled to the at least one core, the requester comprises the at least one core and the remote device comprises a non-coherent device, the coherency bridge circuit to convert the RAO request to a non-coherent RAO request and send the non-coherent RAO request to the remote device, and send the completion to the cache control circuit in response to a global observation of the result.

For example, the remote device is to send a second RAO request to the SoC to cause the SoC to execute at least one second RAO operation of the second RAO request using a second data stored in a second destination location identified in the second RAO request and store a second result of the at least one second RAO operation to the second destination location.

Understand that various combinations of the above examples are possible.

Note that the terms "circuit" and "circuitry" are used interchangeably herein. As used herein, these terms and the term "logic" are used to refer to alone or in any combination, analog circuitry, digital circuitry, hard wired circuitry, programmable circuitry, processor circuitry, microcontroller circuitry, hardware logic circuitry, state machine circuitry and/or any other type of physical hardware component. Embodiments may be used in many different types of systems. For example, in one embodiment a communication device can be arranged to perform the various methods and techniques described herein. Of course, the scope of the present invention is not limited to a communication device, and instead other embodiments can be directed to other types of apparatus for processing instructions, or one or more machine readable media including instructions that in response to being executed on a computing device, cause the device to carry out one or more of the methods and techniques described herein.

Embodiments may be implemented in code and may be stored on a non-transitory storage medium having stored thereon instructions which can be used to program a system to perform the instructions. Embodiments also may be implemented in data and may be stored on a non-transitory storage medium, which if used by at least one machine, causes the at least one machine to fabricate at least one integrated circuit to perform one or more operations. Still further embodiments may be implemented in a computer readable storage medium including information that, when manufactured into a SoC or other processor, is to configure the SoC or other processor to perform one or more operations. The storage medium may include, but is not limited to, any type of disk including floppy disks, optical disks, solid state drives (SSDs), compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), magnetic or optical cards, or any other type of media suitable for storing electronic instructions.

While the present invention has been described with respect to a limited number of embodiments, those skilled in the art will appreciate numerous modifications and variations therefrom.

## Claims

1. A processor (101) comprising:
at least one core (102); and
a cache control circuit (114) coupled to the at least one core (102), wherein the cache control circuit (114) is to:
receive a remote atomic operation, RAO, request from a requester, wherein a RAO is an atomic operation that is executed outside the processor (101);
**characterized in that** the cache control circuit (114) is further to:
send the RAO request and data associated with the RAO request to a destination device (145, 160), wherein the destination device (145, 160) is to execute the RAO using the data and destination data obtained by the destination device (145, 160) and store a result of the RAO to a destination location; and
receive a completion for the RAO from the destination device (145, 160).

2. The processor (101) of claim 1, wherein the cache control circuit (114) is, in response to the RAO request, to perform a write pull to obtain the data.

3. The processor (101) of claim 2, wherein the cache control circuit (114) is to perform the write pull in response to a miss for the data in a cache memory associated with the cache control circuit (114).

4. The processor (101) of claim 1, wherein when the RAO request comprises a non-posted request, the completion comprises the result.

5. The processor (101) of claim 1, wherein when the RAO request comprises a posted request, the completion does not include the result.

6. The processor (101) of claim 1, wherein the destination device (145, 160) comprises a remote device coupled to the processor (101) via a Compute Express Link, CXL, interconnect.

7. The processor (101) of claim 6, wherein the remote device comprises a home agent to send the RAO request and the data to a memory in response to a snoop filter miss for the destination data in the home agent.

8. The processor (101) of claim 6, wherein the remote device comprises a home agent to send the RAO request and the data to a caching agent in response to a snoop filter hit for the destination data in the home agent.

9. The processor (101) of any one of claims 1-8, wherein the destination device (145, 160) comprises a remote processor (101) socket coupled to the processor (101) via a cache coherent interconnect.

10. The processor (101) of any one of claims 1-8, wherein the at least one core (102) is the requester, and the at least one core (102) is to send the data with the RAO request.

11. The processor (101) of any one of claims 1-8, further comprising a token counter, wherein a first core (102) is to send the RAO request to the token counter to cause an increment to the token counter, after writing a first data to a queue, and a first device is to consume the first data based on a value of the token counter.

12. The processor (101) of any one of claims 1-11, further comprising a coherency bridge circuit (140) coupled between a coherent requester and a non-coherent destination device (145), the coherency bridge circuit (140) to translate coherent transactions to non-coherent transactions and translate non-coherent transactions to coherent transactions.

13. The processor (101) of claim 12, wherein the coherency bridge circuit (140) is further to translate a non-coherent request comprising the RAO request to a coherent request comprising the RAO request and send the coherent request to the destination device (145) via a caching agent associated with the destination address.

14. A method to be performed by a processor (101) according to any one of claims 1 to 13, the method comprising:
receiving, by the cache control circuit (114), a remote atomic operation, RAO, request from a requester, wherein a RAO is an atomic operation that is executed outside the processor (101);
sending, by the cache control circuit (114), the RAO request and data associated with the RAO request to a destination device (145, 160), wherein the destination device (145, 160) is to execute the RAO using the data and destination data obtained by the destination device (145, 160) and store a result of the RAO to a destination location; and
receive, by the cache control circuit (114), a completion for the RAO from the destination device (145, 160).

15. A computer-readable storage medium including computer-readable instructions which, when executed by a processor (101), cause the processor (101) to carry out a method according to claim 14.

## Patentansprüche

1. Prozessor (101), der Folgendes umfasst:
mindestens einen Kern (102); und
eine Cachespeicher-Steuerschaltung (114), die an den mindestens einen Kern (102) gekoppelt ist, wobei die Cachespeicher-Steuerschaltung (114):
eine Anforderung einer entfernten atomaren Operation (RAO) von einem Anforderer empfangen soll, wobei eine RAO eine atomare Operation ist, die außerhalb des Prozessors (101) ausgeführt wird;
**dadurch gekennzeichnet, dass** die Cachespeicher-Steuerschaltung (114) ferner:
die RAO-Anforderung und Daten, die der RAO-Anforderung zugeordnet sind, zu einer Zielvorrichtung (145, 160) senden soll, wobei die Zielvorrichtung (145, 160), die RAO unter Verwendung der Daten und Zieldaten, die durch die Zielvorrichtung (145, 160) erhalten wurden, ausführen soll, und ein Ergebnis der RAO an einem Zielort speichern soll; und
einen Abschluss für die RAO von der Zielvorrichtung (145, 160) empfangen soll.

2. Prozessor (101) nach Anspruch 1, wobei die Cachespeicher-Steuerschaltung (114) als Antwort auf die RAO-Anforderung einen Schreibzugriff durchführen soll, um die Daten zu erhalten.

3. Prozessor (101) nach Anspruch 1, wobei die Cachespeicher-Steuerschaltung (114) als Antwort auf ein Fehlen für die Daten in einem Cachespeicher-Speicher, der der Cachespeicher-Steuerschaltung (114) zugeordnet ist, den Schreibzugriff durchführen soll.

4. Prozessor (101) nach Anspruch 1, wobei dann, wenn die RAO eine nicht abgesendete Anforderung umfasst, der Abschluss das Ergebnis enthält.

5. Prozessor (101) nach Anspruch 1, wobei dann, wenn die RAO eine abgesendete Anforderung umfasst, der Abschluss das Ergebnis nicht enthält.

6. Prozessor (101) nach Anspruch 1, wobei die Zielvorrichtung (145, 160) eine entfernte Vorrichtung umfasst, die über eine Compute-Express-Link-Verbindung (CXL-Verbindung) an den Prozessor (101) gekoppelt ist.

7. Prozessor (101) nach Anspruch 6, wobei die entfernte Vorrichtung einen Home-Agent umfasst, um die RAO-Anforderung und die Daten zu einem Speicher zu senden, als Antwort auf ein Fehlschlagen eines Snoop-Filters für die Zieldaten in dem Home-Agent.

8. Prozessor (101) nach Anspruch 6, wobei die entfernte Vorrichtung einen Home-Agenten umfasst, um die RAO-Anforderung und die Daten als Antwort auf einen Treffer eines Snoop-Filters für die Zieldaten in dem Home-Agenten zu einem Caching-Agenten zu senden.

9. Prozessor (101) nach einem der Ansprüche 1-8, wobei die Zielvorrichtung (145, 160) einen Sockel des entfernten Prozessors (101) umfasst, der über eine kohärente Cachespeicher-Verbindung an den Prozessor (101) gekoppelt ist.

10. Prozessor (101) nach einem der Ansprüche 1-8, wobei der mindestens eine Kern (102) der Anforderer ist und der mindestens eine Kern (102) die Daten mit der RAO-Anforderung senden soll.

11. Prozessor (101) nach einem der Ansprüche 1-8, der ferner einen Token-Zähler umfasst, wobei ein erster Kern (102) nach dem Schreiben erster Daten in eine Warteschlange die RAO-Anforderung zu dem Token-Zähler senden soll, um den Token-Zähler zu erhöhen, und eine erste Vorrichtung die ersten Daten basierend auf einem Wert des Token-Zählers verbrauchen soll.

12. Prozessor (101) nach einem der Ansprüche 1-11, der ferner eine Kohärenzbrückenschaltung (140) umfasst, die zwischen einem kohärenten Anforderer und einer nicht kohärenten Zielvorrichtung (145) gekoppelt ist, wobei die Kohärenzbrückenschaltung (140) die kohärenten Transaktionen in nicht kohärente Transaktionen übersetzen soll und nicht kohärente Transaktionen in kohärente Transaktionen übersetzen soll.

13. Prozessor (101) nach Anspruch 12, wobei die Kohärenzbrückenschaltung (140) ferner eine nicht kohärente Anforderung, die die RAO-Anforderung umfasst, in eine kohärente Anforderung, die die RAO-Anforderung umfasst, übersetzen soll und die kohärente Anforderung über einen Caching-Agenten, der der Zieladresse zugeordnet ist, zu der Zielvorrichtung (145) senden soll.

14. Verfahren, das durch einen Prozessor (101) nach einem der Ansprüche 1 bis 13 durchgeführt werden soll, wobei das Verfahren Folgendes umfasst:
Empfangen durch die Cachespeicher-Steuerschaltung (114) einer Anforderung einer entfernten atomaren Operation (RAO) von einem Anforderer, wobei eine RAO eine atomare Operation ist, die außerhalb des Prozessors (101) ausgeführt wird;
Senden durch die Cachespeicher-Steuerschaltung (114) der RAO-Anforderung und von Daten, die der RAO-Anforderung zugeordnet sind, zu einer Zielvorrichtung (145, 160), wobei die Zielvorrichtung (145, 160) die RAO unter Verwendung der Daten und Zieldaten, die durch die Zielvorrichtung (145, 160) erhalten wurden, ausführen und ein Ergebnis der RAO an einem Zielort speichern soll; und
Empfangen durch die Cachespeicher-Steuerschaltung (114) eines Abschlusses für die RAO von der Zielvorrichtung (145, 160) .

15. Computerlesbares Speichermedium, das computerlesbare Anweisungen enthält, die dann, wenn sie von einem Prozessor (101) ausgeführt werden, den Prozessor (101) veranlassen, ein Verfahren nach Anspruch 14 durchzuführen.

## Revendications

1. Processeur (101), comprenant :
au moins un coeur (102) ; et
un circuit de commande de cache (114) couplé à l'au moins un coeur (102), le circuit de commande de cache (114) étant conçu pour :
recevoir une requête d'opération atomique distante, notée RAO, depuis un demandeur, une RAO étant une opération atomique qui est exécutée en dehors du processeur (101) ;
**caractérisé en ce que** le circuit de commande de cache (114) est conçu en outre pour :
envoyer la requête de RAO et des données associées à la requête de RAO à un dispositif de destination (145, 160), le dispositif de destination (145, 160) étant conçu pour exécuter la RAO à l'aide des données et de données de destination obtenues par le dispositif de destination (145, 160) et stocker un résultat de la RAO à un emplacement de destination ; et
recevoir un achèvement pour la RAO depuis le dispositif de destination (145, 160).

2. Processeur (101) selon la revendication 1, dans lequel le circuit de commande de cache (114) est conçu, en réponse à la requête de RAO, pour réaliser une extraction en écriture afin d'obtenir les données.

3. Processeur (101) selon la revendication 2, dans lequel le circuit de commande de cache (114) est conçu pour réaliser l'extraction en écriture en réponse à un défaut d'une mémoire cache associée au circuit de commande de cache (114) pour les données.

4. Processeur (101) selon la revendication 1, dans lequel, lorsque la requête de RAO comprend une requête non postée, l'achèvement comprend le résultat.

5. Processeur (101) selon la revendication 1, dans lequel, lorsque la requête de RAO comprend une requête postée, l'achèvement ne comporte pas le résultat.

6. Processeur (101) selon la revendication 1, dans lequel le dispositif de destination (145, 160) comprend un dispositif distant couplé au processeur (101) via une interconnexion de type Compute Express Link, CXL.

7. Processeur (101) selon la revendication 6, dans lequel le dispositif distant comprend un agent nominal pour envoyer la requête de RAO et les données à une mémoire en réponse à un défaut d'un filtre snoop pour les données de destination dans l'agent nominal.

8. Processeur (101) selon la revendication 6, dans lequel le dispositif distant comprend un agent nominal pour envoyer la requête de RAO et les données à un agent de mise en cache en réponse à un succès d'un filtre snoop pour les données de destination dans l'agent nominal.

9. Processeur (101) selon l'une quelconque des revendications 1 à 8, dans lequel le dispositif de destination (145, 160) comprend un socket distant du processeur (101) couplé au processeur (101) via une interconnexion cohérente de cache.

10. Processeur (101) selon l'une quelconque des revendications 1 à 8, dans lequel l'au moins un coeur (102) est le demandeur, et l'au moins un coeur (102) est conçu pour envoyer les données avec la requête de RAO.

11. Processeur (101) selon l'une quelconque des revendications 1 à 8, comprenant en outre un compteur de jetons, un premier coeur (102) étant conçu pour envoyer la requête de RAO au compteur de jetons pour incrémenter le compteur de jetons, après l'écriture de premières données dans une file d'attente, et un premier dispositif étant conçu pour consommer les premières données sur la base d'une valeur du compteur de jetons.

12. Processeur (101) selon l'une quelconque des revendications 1 à 11, comprenant en outre un circuit pont de cohérence (140) couplé entre un demandeur cohérent et un dispositif de destination non cohérent (145), le circuit pont de cohérence (140) étant conçu pour convertir des transactions cohérentes en des transactions non cohérentes et convertir des transactions non cohérentes en des transactions cohérentes.

13. Processeur (101) selon la revendication 12, dans lequel le circuit pont de cohérence (140) est conçu en outre pour convertir une requête non cohérente comprenant la requête de RAO en une requête cohérente comprenant la requête de RAO et envoyer la requête cohérente au dispositif de destination (145) via un agent de mise en cache associé à l'adresse de destination.

14. Procédé destiné à être réalisé par un processeur (101) selon l'une quelconque des revendications 1 à 13, le procédé comprenant :
la réception, par le circuit de commande de cache (114), d'une requête d'opération atomique distante, notée RAO, depuis un demandeur, une RAO étant une opération atomique qui est exécutée en dehors du processeur (101) ;
l'envoi, par le circuit de commande de cache (114), de la requête de RAO et de données associées à la requête de RAO à un dispositif de destination (145, 160), le dispositif de destination (145, 160) étant conçu pour exécuter la RAO à l'aide des données et de données de destination obtenues par le dispositif de destination (145, 160) et stocker un résultat de la RAO à un emplacement de destination ; et
la réception, par le circuit de commande de cache (114), d'un achèvement pour la RAO depuis le dispositif de destination (145, 160) .

15. Support de stockage lisible par ordinateur comportant des instructions lisibles par ordinateur qui, lorsqu'elles sont exécutées par un processeur (101), amènent le processeur (101) à mettre en œuvre un procédé selon la revendication 14.
